Europäisches Patentamt

European Patent Office

Office européen des brevets

(11) Veröffentlichungsnummer: **0 201 695**

**A2**

(12) **EUROPÄISCHE PATENTANMELDUNG**

(21) Anmeldenummer: 86103832.1

(22) Anmeldetag: **20.03.86**

(51) Int. Cl.⁴: **H01H 33/00** , H01H 31/00

(30) Priorität: **16.04.85 DE 3513499**

(43) Veröffentlichungstag der Anmeldung:
**20.11.86 Patentblatt 86/47**

(84) Benannte Vertragsstaaten:
**CH DE FR GB IT LI NL SE**

(71) Anmelder: **BROWN,BOVERI & CIE**
**Aktiengesellschaft**
**Kallstadter Strasse 1**
**D-6800 Mannheim 31(DE)**

(72) Erfinder: **Matz, Dieter, Dipl.-Ing.**
**Robert Schumann Strasse 17**
**D-6805 Heddesheim(DE)**
Erfinder: **Schmitt, Hans-Jürgen**
**Talstrasse 189**
**D-6905 Schriesheim(DE)**
Erfinder: **Bührer, Bruno, Dipl.-Ing.**
**Hersfelder Strasse 4**
**D-6800 Mannheim 31(DE)**
Erfinder: **Hergert, Gerhard, Ing. grad.**
**Merianstrasse 10**
**D-6940 Weinheim(DE)**

(74) Vertreter: **Kempe, Wolfgang, Dr. et al**
**c/o Brown, Boveri & Cie AG Postfach 351**
**D-6800 Mannheim 1(DE)**

(54) **Lasttrennschalter und Schaltanlage mit diesem Lasttrennschalter.**

(57) In einer Schaltanlage, die in einem Gehäuse - (17) untergebracht ist, das ein Isoliergas (z.B. SF₆) aufweist, sind mehrere dreipolige Lasttrennschalter - (12, 15, 16) angeordnet, von denen jeder Lasttrennschalter (12, 15, 16) sowohl zum Ausschalten als auch zur Erdung herangezogen werden kann. Zu diesem Zweck ist der gesamte Lasttrennschalter mit seinem Isolierstoffgehäuse (15) an einem Antriebsgehäuse (37) befestigt und mit diesem insgesamt verschwenkbar, so daß durch Verschwenken des Lasttrennschalters dieser zur Erdung vorbereitet werden kann. Dadurch entfallen Verriegelungen, mit denen verhindert werden soll, daß eine Erdung bei eingeschaltetem Lasttrennschalter vorgenommen wird.

Fig. 3

## Lasttrennschalter und Schaltanlage mit diesem Lasttrennschalter

Die Erfindung betrifft einen Lasttrennschalter gemäß dem Oberbegriff des Anspruches 1, sowie eine Schaltanlage, in die ein derartiger Lasttrennschalter eingebaut ist.

Lasttrennschalter haben die Aufgabe, einerseits den Nennstrom zu unterbrechen und andererseits dabei eine Trennstrecke nach Vorschrift zu erzeugen. Daher werden im Lasttrennschalter beim Ausschaltvorgang Lichtbögen gezogen, die mittels eines Löschmediums gelöscht werden müssen. Zu diesem Zwecke können die beweglichen Kontaktstücke von Lasttrennschaltern mit einer Kolben-Zylinderanordnung verbunden sein, die Gas komprimiert, dadurch einen Gasstrom hin zum Lichtbogen erzeugt und auf diese Weise den Lichtbogen bebläst.

Zusätzlich ist es erforderlich, bei Schaltanlagen, in denen derartige Lasttrennschalter verwendet werden, eine Erdungsvorrichtung vorzusehen. Dabei ist mittels einer speziellen Verriegelungsanordnung dafür zu sorgen, daß eine Erdung dann nicht vorgenommen wird, wenn der Lasttrennschalter eingeschaltet ist, oder daß ein Lasttrennschalter im Zustand "Erden" nicht eingeschaltet werden kann.

Zu diesem Zwecke sind eine Reihe von mechanischen oder elektronischen Verriegelungseinrichtungen bekanntgeworden. Bei allen diesen Anordnungen ist der Aufwand für die mechanische Verriegelung und für die elektronische Verriegelung verhältnismäßig hoch.

Aufgabe der Erfindung ist· es, einen Lasttrennschalter der eingangs genannten Art sowie eine Schaltanlage mit diesem Lasttrennschalter zu - schaffen, bei der zusätzliche Verriegelungselemente vermieden sind und bei der das Löschen des Lichtbogens günstig beeinflußt werden kann.

Diese Aufgabe wird erfindungsgemäß durch die kennzeichnenden Merkmale des Anspruches 1 gelöst.

Aufgrund der erfindungsgemäßen Ausgestaltung des Lasttrenners oder des Lasttrennschalters besitzt der einzelne Schalter insgesamt zwei bzw. drei Funktionen: er kann zum einen zum Abschalten einer Last, zum anderen zur Herstellung einer Trennstrecke und drittens zur Erzielung einer Erdung verwendet werden. Der Lasttrenner schaltet ab, wodurch er frei verschwenkbar wird und durch Verschwenken des Antriebsgehäuses zusammen mit dem Lasttrennschalter wird dieser zur Erdung vorbereitet; durch Betätigung des Abtriebs in Richtung Einschalten wird die Erdung hergestellt. eine Verriegelungsvorrichtung, die in ganz spezieller Weise hindert, daß "Erde" bei eingeschaltetem Lasttrennschalter eingeschaltet werden kann, wird alleine dadurch vermieden, daß der Lasttrenner selbst zur Erzielung der Erdung herangezogen wird.

Daß dies bewerkstelligt werden kann, ist darauf zurückzuführen, daß im ausgeschalteten Zustand der Lasttrennschalter frei ist von den feststehenden Kontaktstücken. Dies bedeutet darüberhinaus auch wierderum, daß die Schaltstrecke nicht eingekapselt ist. Wenn ein derartiger Lasttrenner in ein Schaltanlagengehäuse eingebaut ist, das gasdicht verschlossen und mit einem Isoliergas z.B. mit $SF_6$-Gas gefüllt ist, was erfindungsgemäß bei der Schaltanlage mit diesem eingebauten Lasttrennschalter der Fall ist, besteht gemäß kennzeichnendem Teil des Anspruches 6 die Möglichkeit, daß die Schaltstrecke, also diejenige Strecke, die den Lichtbogen zieht, sich praktisch frei innerhalb des Schaltanlagengehäuses befindet, wodurch das im Inneren des Gehäuses befindliche Isoliermedium, z.B. $SF_6$-Gas, gleichzeitig auch als Löschgas für den Lasttrennschalter verwendet wird.

Wenn in dieser Schaltanlage die einzelnen Pole eines Lasttrennschalters in einer Reihe oder in Ebene angeordnet sind, und wenn im Inneren der Schaltanlage insgesamt zwei derartige Lasttrennschalter untergebracht sind, dann können zweckmäßigerweise die beiden Erdungskontakte in die Mitte zwischen den beiden Reihen untergebracht werden, wodurch dann die beiden Lasttrennschalter spiegelsymmentrisch einander zugeordnet sein müssen. Dann ist es aber ohne Probleme möglich, diesen Doppelerdungs kontakt isoliert aus dem Schaltanlagengehäuse herauszuführen und darüberhinaus Prüf-Gleichspannung nach innen einzuleiten; je nach dem, welcher Schalter mit den Erdungskontakten verbunden ist, kann dann die betreffende Schalterpolreihe mit der Prüfspannung beaufschlagt werden.

Weitere vorteilhafte Ausgestaltungen der Erfindung und weitere vorteilhafte Verbesserungen gehen aus den weiteren Unteransprüchen hervor.

Anhand der Zeichnung, in der einige Ausführungsbeispiele der Erfindung dargestellt sind, soll die Erfindung näher erläutert und beschrieben werden.

Est zeigt:

Fig. 1 das Schaltbild eines Mittelspannung-Netzstationsfeldes

Fig. 2 einen Lasttrennschalter gemäß der Erfindung im Querschnitt, der in das Stationsfeld gem. Fig. 1 eingesetzt ist,

Fig. 3 ein Netzstationsfeld mit eingebauten Lasttrennschaltern und Abgängen gemäß einer ersten Ausführungsform und

Fig. 4 ein der Schaltanlage gemäß Figur 2 ähnliches Feld, mit unterschiedlicher Anordnung der Erdungskontakte.

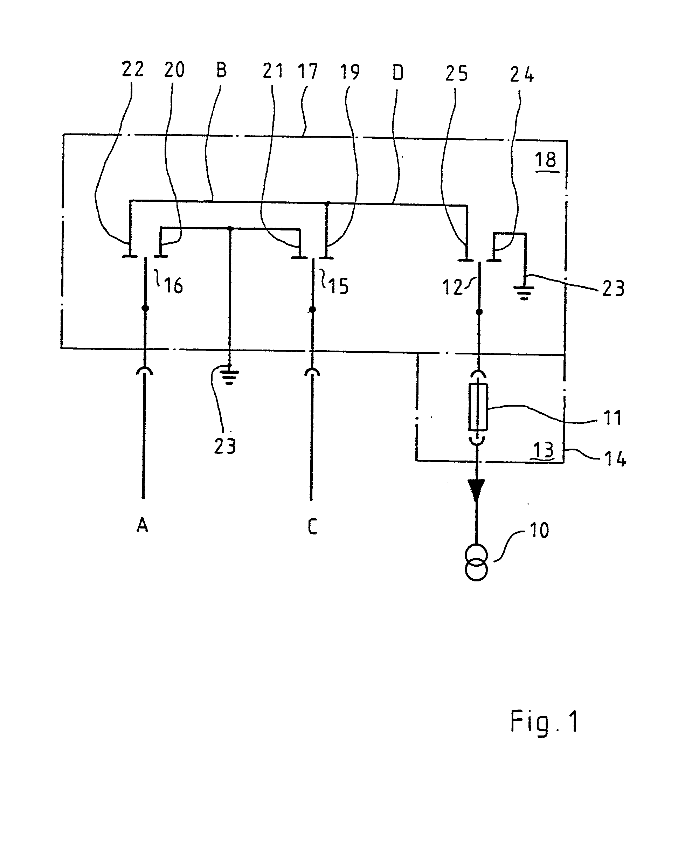

Es wird Bezug genommen auf die Figur 1,

Ein Mittelspannungsnetz-Stationsfeld ist in einen sogenannten Kabelring eingeschaltet, der über eine Sicherung 11 und einen Lasttrennschalter 12 mit einem Transformator 10 verbunden ist. Die Sicherung 11 befindet sich in einem Isolierraum 13, der von einer Feststoff-Isolierung 14 umschlossen ist. Der Lasttrennschalter 12 befindet sich zusammen mit zwei weiteren Lasttrennschaltern 15 und 16 in einem gasdicht verschlossenen Gehäuse 17, in dessen Innenraum 18 sich z.B. SF₆-Gas sich befindet. Der Kabelstrang A, B und C ist ein Teil des Kabelringes, der über den Leitungsstrang D mit dem Transformator verbunden ist, wobei der Einspeisungspunkt in den Kabelring zwischen den beiden Festkontaktstücken 19 und 20 der Lasttrennschalter 15 und 16 gelegen ist. Im Bereich der Lasttrennschalter 15 und 16 befinden sich Kontaktstücke 21 und 22, die jeweils mit Erde 23 verbunden sind. Auch der Lasttrennschalter 12 besitzt zwei feste Kontaktstücke, von denen das Kontaktstück 24 im eingeschalteten Zustand den Nennstrom führt und das Kontaktstück 25 den Kontaktstücken 21 und 22 entspricht und wieder mit Erde 23 verbunden ist.

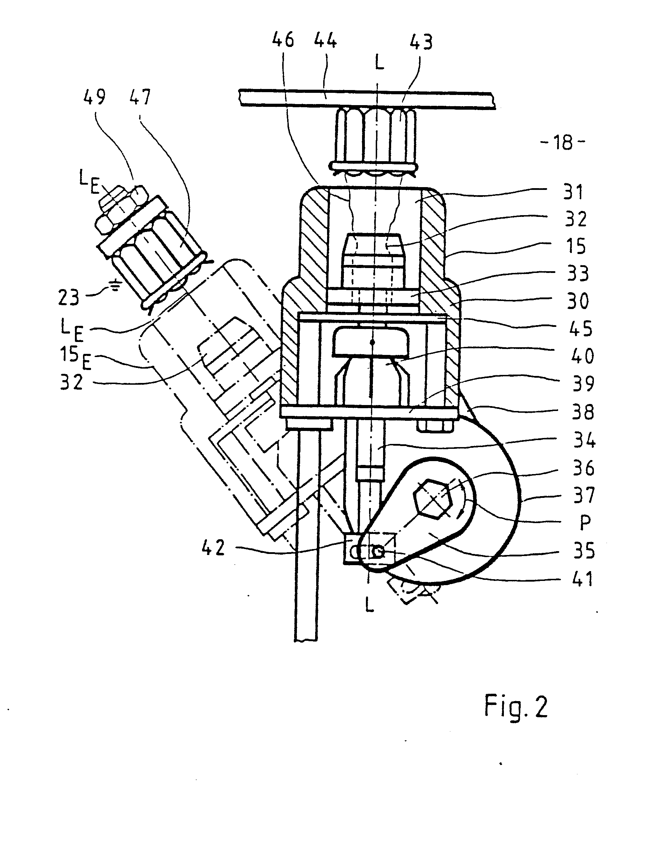

Die Figur 2 zeigt eine detaillierte Konstruktion eines Lasttrennschalters, bspw. des Lasttrennschalters 15. Der Lasttrennschalter 15 besitzt ein Gehäuse 30 aus Isolierstoff, das eine Durchgangsöffnung 31 aufweist, in dem das bewegliche Kontaktstück 32 des Lasttrennschalters 15 geführt ist. An dem Kontaktstück 32 befindet sich ein Kolbenelement 33, das genau in die Öffnung 31 hineinpaßt. Uber eine Kolbenstange 34 ist das bewegliche Kontaktstück mit der Kurbel 35 eines Antriebes, von dem lediglich die Antriebswelle 36 zu sehen ist, verbunden; der Antrieb befindet sich in einer Antriebslagerung 37 (Gehäuse 37), die über eine Traverse 38 mit dem Isoliergehäuse 30 fest verbunden ist. Über den Anschlußflansch 39 und den Gleitkontakt 40 wird der Strom auf den beweglichen Kontakt 32 geführt. Von Bedeutung für die Erfindung sind nicht die weiteren Innenteile, sondern lediglich die feste und starre Verbindung des Isoliergehäuses 30 mit dem Gehäuse 37 für den Antrieb und die entsprechend zugeordnete Führung des beweglichen Kontaktstückes 32 innerhalb des Gehäuses 30. Das freie Ende der Kurbelwelle 35 besitzt einen Querzapfen 41, der in einem Langloch 42 an der Kolbenstange 34 beweglich ist. Das Langloch 42 gleicht dann die Kreisbewegung des Zapfens 41 beim Ein-bzw. Ausschalten aus. Wenn der Antrieb betätigt wird, die Antriebswelle 36 und damit die Kurbel 35 gemäß Doppelpfeilrichtung P betätigt wird, wird je nach Drehrichtung der Lasttrennschalter eingeschaltet bzw. ausgeschaltet.

Das bewegliche Kontaktstück 32 wirkt mit einem Festkontaktstück 43 zusammen, welches Festkontaktstück in der Figur 1 mit der Bezugsziffer 19 bezeichnet ist. Das Festkontaktstück 43 ist an einer Sammelschiene 44 befestigt, die der Leitung bzw. dem Leitungsstrang B in der Figur 1 entspricht.

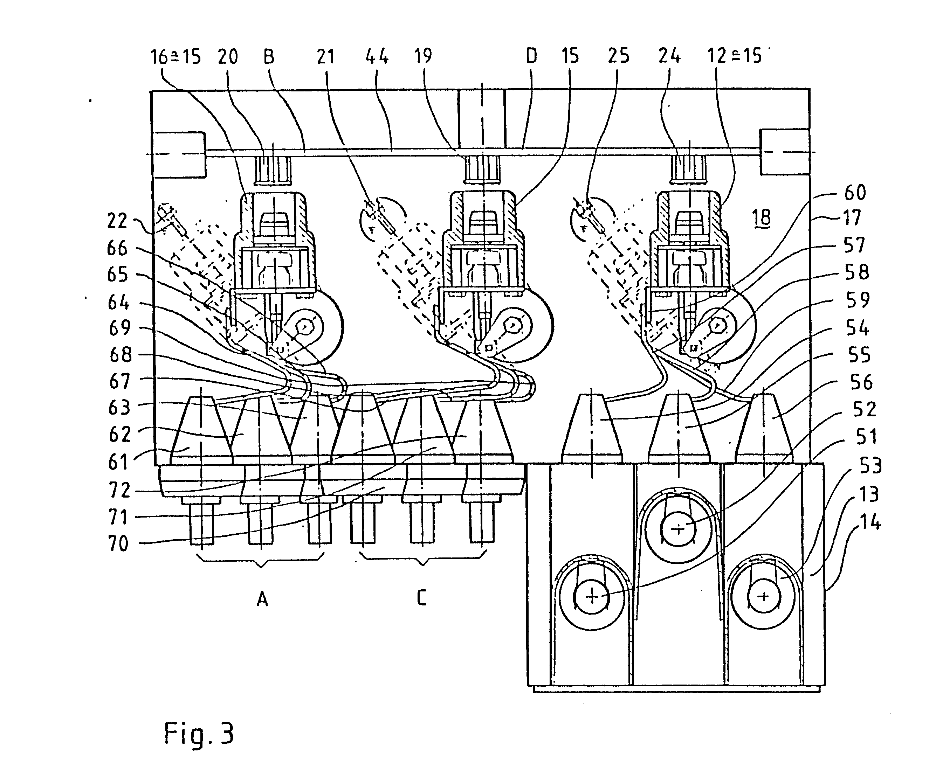

Wenn der Lasttrennschalter aus dem eingeschalteten Zustand, wenn also das bewegliche Kontaktstück 32 mit dem festen Kontaktstück 43 in Verbindung steht, ausgeschaltet wird, dann wird über eine nicht näher dargestellte Zuführungsleitung das durch den Kolben 33 in Zusammenwirken mit einem Zylinderboden 45 komprimierte Gas dem zwischen den beiden Kontaktstücken brennenden Lichtbogen 46 zugeführt. Wie man aus der Figur 3 ersehen kann, ist die Trennstelle frei im Innenraum 18 des Gehäuses 17, so daß das im Innenraum 18 befindliche Gas z.B. SF₆-Gas nicht nur zur Isolierung der Sammelschienen bzw. der auf Hochspannung bzw. auf Mittelspannung befindlichen Teile dient, sondern auch zur Beblasung des Lichtbogens 46 und damit zu dessen Löschung.

Unter einem Winkel von ca. 30° zu der Verbindungslinie L-L zwischen dem festen und beweglichen Kontaktstück, also der Mittellinie der Kolbenstange 34 befindet sich ein Erdungskontaktstück 47. Die Erde ist mit 23 bezeichnet. Wenn nun der Lasttrennschalter 15 in die Erdungsstellung geschwenkt werden soll, dann wird das Antriebsgehäuse 37 und das mit dem Antriebsgehäuse 37 über die Traverse 38 verbundene Isoliergehäuse mit den Teilen 40 und dem beweglichen Kontaktstück 32 geschwenkt, und zwar soweit, bis die Mittelachse $L_E$-$L_E$ des Erdungskontaktstückes 47 mit der Mittelachse L-L des Lasttrennschalters fluchtet: man hat die in der Figur 2 strichpunktiert eingezeichnete Stellung $15_E$ erreicht. Nun kann das bewegliche Kontaktstück 32 mit dem Erdungskontaktstück 47 in Verbindung gebracht werden; die strichpunktierte Stellung $15_E$ ist die Stellung "Erdung vorbereitet" und durch einfaches Einschalten, also betätigen des Antriebs, kann der Lasttrenner in Erdungsstellung verbracht werden. Man erkennt hieraus, daß der Lastschalter selbst die Erdung vornimmt, so daß spezielle Erdungsschalter und damit Verriegelungseinrichtungen, um ein unzulässiges Erden zu verhindern, vermieden werden. Um den Lasttrennschalter wieder einzuschalten, wird dann einfach wieder das Antriebsgehäuse 37 in die dick ausgezogene Verstellung zurück verschwenkt und das bewegliche Konstaktstück 32 kann durch Verdrehen der Antriebswelle 36 wieder in Einschaltstellung verbracht werden.

Es sei nun Bezug genommen auf die Figur 3.

In der Figur 3 ist ein Netzstationsfeld teilweise geschnitten dargestellt, das der Figur 1 entspricht und in den Schalter gemäß Figur 2 eingebaut sind. Man erkennt den Raum 13 in dem Gehäuse 14, mit den dem Transformator vorgeschalteten HH-Sicherungen 51, 52 und 53. Über Durchführungen 54, 55 und 56 sind diese HH-Sicherungen 51 bis 53 in das Gehäuseinnere 18 des Gehäuses 17 eingeführt, wobei hier im wesentlichen handelsübliche Kabeldurchführungen oder Kabelendverschlüsse verwendet werden können. An die Durchführungen 54 bis 56 schließen sich Litzenleiter 57, 58 und 59 an, die an einen Anschlußwinkel 60 angeschlossen sind; in der Figur 3 erkennt man lediglich einen Anschlußwinkel 60; die beiden dahinterliegenden, zu den Leitern 58 und 59 gehörenden Schalter, die in ein Dreiphasensystem gehören, sind nicht dargestellt. Der Lasttrennschalter 12 entspricht dem Lasttrennschalter 15, dessen Wirkungsweise anhand der Figur 2 erläutert ist. Der Kabelring wird dann gebildet durch die dreiphasige Zuführungsleitung A, die über Kabeldurchführungen 61, 62 und 63 in das Innere des Gehäuses 17 eingeführt ist und mit den Lasttrennern 16 über Litzenleitungen 64, 65 und 66 verbunden ist. Man erkennt auch hier nur einen von drei Lasttrennschalterpolen; die beiden anderen sind in einer Ebene dahinter angeordnet. Über die Sammelschiene 44, die der Leitung bzw. den Leitungszug B entspricht und die mit dem Leitungszug D zu dem Schalter 12 eine Einheit und eine einzige Sammelschiene bildet, ist der Schalter 16 über das Kontaktstück 19 mit dem Schalter 15 verbunden, dessen einzele Schalterpole über die Litzen 67, 68 und 69 mit den Kabeldurchführungen 70, 71 und 72 verbunden sind, die selbst wiederum zu der Leitungsführung C hingeführt sind. Die Erdungskontakte 21 und 22 sowie 25 sind links von den Schalterpolen angeordnet, und zwar so wie in der Figur 2 der Erdungskontakt 46, so daß in diesem Zusammenhang hierauf verwiesen wird. Alle drei Lastschalterpole besitzen jeweils ein einheitliches und für alle drei gemeinsames Antriebsgehäuse, das dem Antriebsgehäuse 37 entspricht; durch Verschwenkung dieses Antriebsgehäuses können alle drei Schalterpole in Betriebs- bzw. in Erdungsstellung verbracht werden.

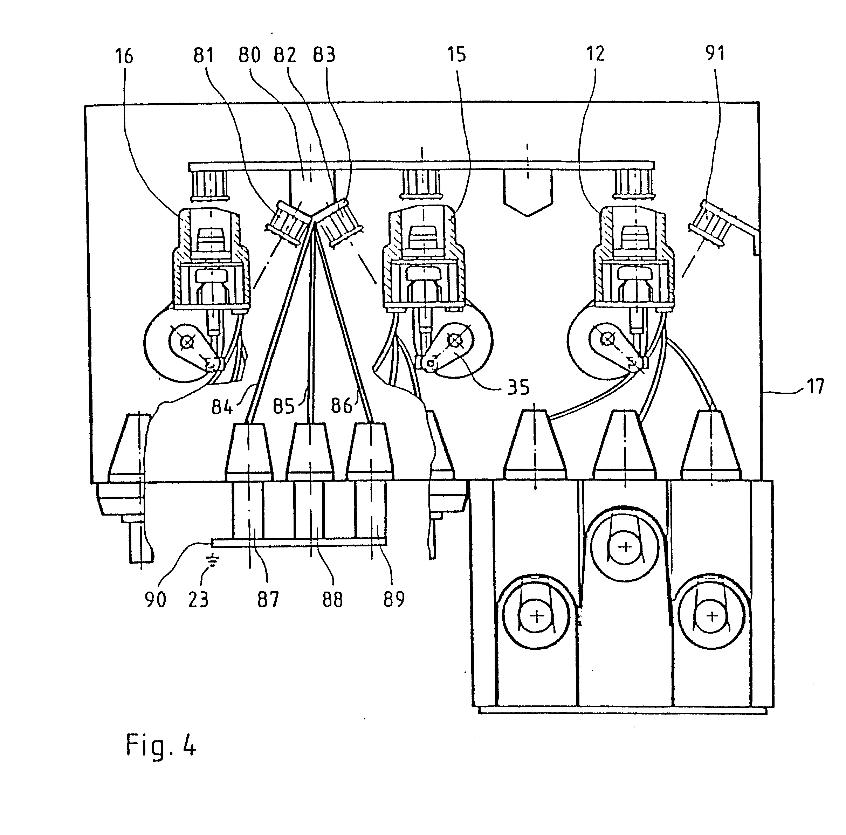

In der Figur 4 ist eine Variante dargestellt. Die beiden nebeneinander innerhalb des Kabelrings befindlichen Schalter 16 und 15 sind spiegelbildlich einander zugeordnet, dergestalt, daß die Kurbeln nicht parallel, wie in der Figur 3 dargestellt zueinander angeordnet sind, sondern spiegelsymmetrisch, so daß sie in der Figur 4 gezeigten Stellung einen spitzen Winkel zwischen sich bilden. Antriebsgehäuse und Schalter sind quasi spiegelsymmetrisch um 180° verdreht. Dies hat zur Folge, daß man in den Zwischenraum zwischen den beiden Schaltern 15 und 16 einen Erdungsanschluß 80 einfügen kann, an dem Erdungsanschlußkontakte 81 und 82 über einen Halter 83 angeschlossen sind. Man kann nun den Halter 83 für jeden einzelnen Schalterpol gegeneinander isoliert aus dem Gehäuse 17 über die Leitungen 84, 85, bzw. 86 und die Durchführungen 87, 88 und 89 herausführen.

Man hat dann zwei Möglichkeiten: über eine verbindende Erdungsschiene 90 können alle drei Leiter 84, 85 und 86 und damit die Erdungskontakte 81 und 82 für die drei Schalterpole an Erde 23 gelegt werden bzw. es besteht die Möglichkeit, die Verbindungsschienen 90 zu entfernen und über die einzelnen Durchführungen 87, 88 und 89 jeweils für jeden Pol und für jeden Schalter 15 bzw 16 getrennt eine Prüfgleichspannung ins Innere des Gehäuses einzuführen. Bei dieser Konstruktion wird dann der Schalter 12 in der gleichen Ausrichtung innerhalb des Gehäuses 17 angeordnet, wie der Schalter 16, so daß die beiden Kurbeln der beiden Schalter 12 und 16 parallel und nur die Kurbel 35 des mittleren Schalters in die andere Richtung gerichtet sind; in diesem Falle kann dann die Erdungseinrichtung, die bei der Ausführung gemäß Figur 3 zwischen den beiden Schaltern 12 und 15 gelegen ist, an das Gehäuse 17 angeschlossen werden; diese Erdungsschaltung besitzt dann die Bezugsziffer 91.

**Ansprüche**

1. Lasttrennschalter mit einem festen Kontaktstück und einem von einem Antrieb betätigbaren, von einem Isolierstoffgehäuse umgebenen bewegbaren Kontaktstück, und mit einem Erdungskontakt, der gegenüber dem festen Kontaktstück versetzt angeordnet ist, dadurch gekennzeichnet, daß das Isolierstoffgehäuse (30), das zur Führung des als Schubkontaktstück ausgebildeten beweglichen Kontaktstückes (32) dient, mit dem Antriebsgehäuse (37) zur Aufnahme des den Lasttrennschalter antreibenden Antriebs fest verbunden ist, und daß zur Erzielung der Erdungsstellung das Antriebsgehäuse mit dem Antrieb und das Isolierstoffgehäuse gemeinsam schwenkbar sind.

2. Lasttrennschalter nach Anspruch 1, dadurch gekennzeichnet, daß das Isolierstoffgehäuse
rohrförmig ist und zwei Querwände (45, 39) zur
Führung des beweglichen Kontaktstückes (32) aufweist.

3. Lasttrennschalter nach Anspruch 1 oder 2,
dadurch gekennzeichnet, daß der Antrieb ein
mechanischer Federantrieb ist, dessen Federenergie nach Lösung einer Verklinkung plötzlich das
Kontaktstück in Ausschaltstellung verbringt.

4. Lasttrennschalter nach Anspruch 3, dadurch gekennzeichnet, daß als Schaltkontakte Rundkontaktstücke vorgesehen sind, die mit lichtbogenfestem Kontaktmaterial beschichtet sind.

5. Schaltanlage mit mindestens einem dreipoligen,
aus drei Lasttrennern nach einem der vorigen Ansprüche gebildeten Lasttrennerschaltanordnung,
dadurch gekennzeichnet, daß das Gehäuse (17)
der Schaltanlage gasdicht ausgebildet und mit einem Isoliergas, vorzugsweise SF₆-Gas gefüllt ist.

6. Schaltanlage nach Anspruch 5, dadurch gekennzeichnet, daß zur Bildung des dreipoligen
Lasttrennschalters die einzelnen Lasttrennschalter -
(12, 15, 16) für jeden Pol in einer Reihe angeordnet
sind und daß bei zwei nebeneinander liegenden
Reihen die Erdungskontakte für beide Reihen
dazwischen liegen und dort von einem beide miteinander verbindenden Halter (83) aus elektrisch leitendem Material gehalten sind.

7. Schaltanlage nach Anspruch 6, dadurch gekennzeichnet, daß an den Halter Anschlußleitungen (84,
85, 86) angeschlossen sind, die über
Durchführungen aus dem Gehäuse (17) gegenüber
diesem isoliert herausgeführt sind und über die
eine Gleich-Prüfspannung den einzelnen Schalterpolen zuführbar ist.

8. Schaltanlage nach den Ansprüchen 5 bis 7,
dadurch gekennzeichnet, daß die Schaltstrecke des
Lasttrennschalters (12, 15, 16) frei im Gehäuse -
(17) der Schaltanlage und nicht von Isolierstoffgehäuse umgeben ist, so daß das im Gehäuse -
(17) der Schaltanlage eingeschlossene Isoliergas
gleichzeitig als Löschgas für einen beim Ausschalten des Lasttrennschalters (12, 15, 16) unter
lastauftretenden Lichtbogen dient.

Fig. 1

Fig. 2

Fig. 3

0 201 695

Fig. 4

0 201 695